# EUROPEAN PATENT SPECIFICATION

(11) **EP 1 898 484 B1**
(45) Date of publication and mention of the grant of the patent: **19.10.2011**
(21) Application number: 07017240.8
(22) Date of filing: 03.09.2007
(51) Int. Cl.: H01M 8/04, F04B 39/00, F04B 39/06

(54) **Apparatus for supplying air to fuel cell**
Vorrichtung zum Zuführen von Luft zu einer Brennstoffzelle
Appareil pour la fourniture d'air à une pile à combustible

(30) Priority: 07.09.2006 JP 2006242564
(43) Date of publication of application: 12.03.2008
(73) Proprietor: YAMAHA CORPORATION, Hamamatsu-shi Shizuoka-ken (JP)
(72) Inventor: Nakamura, Yasutaka, Hamamatsu-shi Shizuoka-ken (JP); Hiyama, Kunio, Hamamatsu-shi Shizuoka-ken (JP)
(74) Representative: Emde, Eric

(56) References cited:
- EP-A- 0 360 048
- EP-A- 1 191 224
- EP-A- 1 376 725
- GB-A- 1 556 494
- JP-A- 2 102 313
- JP-A- 2 103 366
- JP-A- 2004 218 536
- US-A- 5 380 267
- US-A- 5 957 667
- US-A1- 2001 049 036
- US-A1- 2002 187 373
- US-A1- 2005 066 680
- US-A1- 2005 076 623
- US-A1- 2005 106 036
- US-A1- 2005 175 871
- US-A1- 2005 188 708
- US-A1- 2006 024 178
- US-B1- 6 202 428
- DATABASE WPI Week 197444 Derwent Publications Ltd., London, GB; AN 1974-77008V XP002463953 & SU 407 987 A (CELLULOSE PAPER IND DES) 31 May 1974 (1974-05-31)

## Description

### BACKGROUND OF THE INVENTION

### Field of the Invention

The present invention generally relates to a method of manufacturing an apparatus for supplying air to a fuel cell.

### Description of the Related Art

A fuel cell system includes an air supplier for supplying an oxygen-containing air to a fuel cell. A typical example of the fuel cell may include, but is not limited to, a direct methanol fuel cell which is configured to cause a reaction between methanol as a fuel and oxygen in the air, thereby generating power. The fuel cell generates almost no sound noise. The air supplier is configured to supply air to the fuel cell. The air supplier may often include a pump for feeding air to the fuel cell and an electric motor that drives the pump. The pump and the electronic motor that are included in the air supplier can generate sound noises such as discharge sounds.

Use of the fuel cell system in the outdoor causes no problem with sound noises that are generated by the air supplier. Use of the fuel cell system in the indoor may cause the problem with the sound noises that are generated by the air supplier. In some cases, the fuel cell system including a fuel cell and an air supplier can be used to supply power to an acoustic system such as an electronic musical instrument in the indoor. The pump and the electronic motor that are included in the air supplier can generate sound noises such that disturb musical performance. The pump and the electronic motor may be regarded as sound noise generators.

JP 2002-343394 A discloses a conventional technique solving the problem, wherein such sound generators as the pump and the electronic motor in the air supplier are contained in a housing. The housing shields sound noises that are generated by the sound generators such as the pump and the electronic motor. The housing can have a silencer or a sound absorber. The sound noises that are generated by the pump and the electronic motor are not only shielded by the housing but also absorbed by the sound absorber. The housing with the sound absorber reduces sound noises that are leaked to the outside from the housing. The above publication discloses that the passage in which sound is generated is formed by an expansion chamber, thereby reducing the leakage of sound to the outside.

The pump and the electronic motor contained in the housing generate heat that is also shielded in the housing, thereby causing heat accumulation. As a result, the pump and the electronic motor can excessively be heated. Particularly, the electronic motor generates a large amount of heat. It is actually difficult to realize efficient heat radiation from the housing. Excessive heat accumulation may cause defective operations of the electronic motor and the pump. A radiator opening can be provided on the housing wall to promote efficient heat radiation from the housing. The radiator opening can, however, cause the problem with leakage of sound noises that are generated by the electronic motor and the pump, thereby making it difficult to reduce the sound noises.

GB-A-1 556 494 discloses an air compression unit comprising two fabricated hollow structures within which are located respectively a motor driven air blower and silencing equipment, the inner surfaces of the said structure being lined with a sound absorbing layer of insulating fibre sandwiched between sheets of thin perforated metal, the two structures being connected together by resilient mountings to minimise the transmission of vibrations; a filter arranged to remove dust from the air before it enters the first of the said structures, said air being directed by baffles within the first structure, across the surface of the blower and motor in order to dissipate the heat generated by the blower and motor, the air then entering a suction chamber connected to a duct for directing the air into the blower, the pressurised air discharge from the blower flowing via a flexible pipe into the said silencing equipment, said equipment comprising a length of perforated tube extending partially into a cylinder which receives the discharged air, the end within the cylinder being blanked off thereby causing the issuing air to be deflected and thus enter the tube through the perforations resulting in a diminuendo of the vibrations, the air then passing via a flexible coupling pipe into a second perforated tube an from there to an outlet via a second flexible coupling pipe, the second tube being disposed in a second cylinder with the annular region between the second cylinder and the second tube packed with an acoustic fibre, the afore mentioned cylinders being mounted in the second structure on resilient mountings to minimise the transmission of mechanical vibrations.

US 2001/049036 A discloses a compressor arrangement for the operation of a fuel cell system, wherein a compressed air flow can be delivered from the compressor arrangement, which is driven by an electric motor, to the fuel cell system and wherein the compressor arrangement and optionally the electric motor are at least partly surrounded by a sound insulation, wherein the sound insulation is permeable to air and is provided within a housing which at least partly surrounds the compressor and preferably also the electric motor, and in that at least a part of the air intake flow for the compressor arrangement can be directed through the air permeable sound insulation before it enters into the compressor inlet.

EP-A-0 360 048 discloses that, with a device for producing transport air for pneumatically conveyable media to be transported out of bulk containers, especially a transport air compressor to be carried on bulk transporters, the intention is to provide a solution with which lasting noise reduction during the operation of such transport-air compressors can be achieved. This is achieved by the fact that the compressor is accommodated coaxially with an electric driving motor in a closed housing with an air intake opening and an outlet pipe for the transport air.

US 2005/066680 A discloses a feed gas supply unit for a fuel cell system which uses a feed gas supply and/or cooling fluid passages to cool the control unit, bearings, and motor of the feed gas supply device.

EP-A-1 191 224 discloses a high-pressure dome type compressor which comprises a motor using a rare earth magnet and has stable performance. There are provided a compression element and a DC motor for driving the compression element in a casing. The motor is disposed in a high pressure area, which obtains a high temperature and high pressure due to a discharged gas. An inverter controls a current to be supplied to the motor such that a temperature of the motor becomes equal to a predetermined temperature or lower and that an opposing magnetic field generated in a stator of the motor has a predetermined strength or less. Therefore, since the rare earth magnet of the motor does not obtain a high temperature and is not exposed to a strong opposing magnetic field, the magnet is hardly demagnetized. Thus, performance of the motor and further performance of the high-pressure dome type compressor become stable.

US 2002/187373 A discloses a compressor arrangement for the operation of a fuel cell system, wherein a compressed air flow can be delivered from the compressor arrangement, which is driven by an electric motor, to the fuel cell system and wherein the compressor arrangement and optionally the electric motor are at least partly surrounded by a sound insulation, wherein the sound insulation is permeable to air and is provided within a housing which at least partly surrounds the compressor and preferably also the electric motor, and in that at least a part of the air intake flow for the compressor arrangement can be directed through the air permeable sound insulation before it enters into the compressor inlet.

US-A-5,957,667 discloses an oilless gas compressor including a motor containment vessel containing a motor for driving the compressor and a crankcase attached to the motor containment vessel. The crankcase and the motor containment vessel are fluidly connected and together define a sealed, pressurizable interior cavity in which the rotatable motor shaft is disposed. The compressor further includes a cylinder mounted upon the crankcase, the cylinder having a piston disposed therein. The piston is connected to the shaft for reciprocation of the piston within the cylinder. The cylinder also includes a gas intake valve, fluidly connected to the compressor suction inlet port, and a gas discharge valve, fluidly connected to the compressor discharge outlet port. The oilless gas compressor, in which the need for perimeter rotating shaft seals is obviated, is suitable for compression of precious or toxic gases or flammable gases, such as natural gas.

US 2006/024178 A discloses a turbo generator and a fuel cell system having the same. The turbo generator includes a housing; an air inlet formed on the same axis as the axis of the housing on a first side of the housing; a rotor, a stator winding unit, impeller, and a turbine wheel mounted in the housing; and a tie-shaft installed to pass through the impeller and the turbine wheel and rotatably and integrally support the rotor.

US-B1-6,202,428 discloses that in an air conditioner having a refrigerant circuit in which a compressor, a four-way switching valve, an outdoor-side heat exchanger, an expansion valve, and an indoor-side heat exchanger are connected in succession via pipes, the interior of an enclosed vessel of a compressor, which contains a refrigerant compressing section and an electric motor, is divided airtightly into a refrigerant discharge chamber and an electric motor chamber, two refrigerant flow path pipes are provided on the electric motor chamber side, and these refrigerant flow path pipes are appropriately switched to the refrigerant discharge side and the refrigerant suction side of the compressor via the four-way switching valve, whereby one compressor can be used as an internal high pressure type or an internal low pressure type.

JP 2004/218536 A discloses an electric compressor. In order to improve compression efficiency by preventing increase in gas temperature, in an electric compressor equipped with a compressing part that compresses gas inhaled from an intake port placed in a housing and an electric motor inside the housing, the intake port placed in the housing is arranged near the compressing part side rather than the electric motor. The electric motor is a motor coping with high temperature, such as a rare-earth magnet motor and a concentrated-winding motor. The inhaled gas does not pass through the high-temperature electric motor, and shortening of a passage to the compressing part makes the gas unsubject to heat from the housing and the like. Therefore, increase in the gas temperature is suppressed, and the compression efficiency can be improved.

US-A-5,380,267 discloses a pneumatic compression that supplies both positive and negative pressure for operating a medical device. The pulsing sounds generated by the compressor are attenuated by connecting the inlet of the positive pressure side of the compressor and the outlet of the negative pressure side of the compressor to a common resonating chamber. A port in the resonating chamber acts as an outlet for the discharge of excess air in the chamber and an inlet for the entry of make-up air. By adjusting the diameter of the port with respect to the volume of the resonating chamber, sound attenuation can be optimized. In a compact design, the compressor housing serves as the resonating chamber.

JP 02-102313 A discloses a muffling device for a chamber. In order to obtain a muffling device of chamber capable of damping noise even at low frequency zone effectively in the extreme by incorporating or providing on the chamber one or multiple resonance cylinders of which one end is open and the other is closed and having a depth of about a quarter of a target noise wave length, a muffling device of a chamber is so constructed that four resonance cylinders are incorporated in, for example, a chamber made of galvanized sheet with a gas delivery opening in two directions. A duct is connected to one of the gas delivery opening; a fan is connected to the other opening through a canvas connector. The resonance cylinders are so formed that, for example, galvanized sheet is folded several times in Z form, each one of the bottoms in opened in wedge form and the other is closed and the depth of each of the resonance cylinders is a quarter of the noise wave length to which noise is desired to be lowered. Also the open ends of the resonance cylinders are faced toward the air passage of the chamber.

Further, attention is drawn to DATABASE WPI Week 197444 Derwent Publications Ltd., London, GB; AN 1974-77008V & SU 407 987 A (CELLULOSE PAPER IND DES) 31 May 1974 (1974-05-31).

US 2005/076623 A discloses a filter assembly for removing particulate contaminants and chemical contaminants from an incoming dirty air stream for a fuel cell. The filter assembly also includes a noise suppression element that reduces sound waves or noise emanating from any equipment, such as a compressor. The filter assembly can include a particulate filter portion for removing physical or particulate contaminants, a chemical filter portion for removing chemical contaminants, or can have both portions.

US 2005/106036 A discloses a compressor including a housing defining an interior plenum; a refrigerant received within the interior plenum and having a resonant wavelength; a motor disposed within the housing; a compression mechanism disposed within the housing and operably connected to the motor; and a tuner. The tuner has an open end and a closed end, and defines a resonating cavity, which is in direct communication with the interior plenum via the open end. The resonating cavity defines a length extending from open end to closed end that measures one-fourth of the resonant wavelength of the compressor assembly or of a noise frequency for which attenuation is desired. The tuner may be curved or straight and may extend vertically or horizontally. A suction inlet tube extends through the housing and communicates refrigerant to the interior plenum. The open end of the tuner indirectly communicates with the suction inlet tube through the interior plenum.

US 2005/188708 A discloses a system and method for variable speed operation of a screw compressor to obtain increased capacity and efficiency. The screw compressor is connected to an induction motor driven by a variable speed drive, wherein the screw compressor has a variable output capacity that is dependent on the output speed of the motor. To obtain increased capacity and efficiency, the screw compressor is operated at a speed greater than the screw compressor's rated speed and does not include a slide valve. The maximum operating speed of the screw compressor, which speed is greater than the rated speed, is related to the maximum operating speed of the motor when operated at a voltage and frequency provided by the variable speed drive that is greater than the motor's rated voltage and frequency in a constant flux or constant volts/Hz mode.

US 2005/175871 A discloses a method and apparatus of operating a compressor of a fuel cell system including modeling a flow meter that measures a mass flow from a compressor with a first mathematical formula and generating a measured signal from the flow meter. The first mathematical formula and the measured signal are processed through a recursive Kalman filter based signal processing algorithm to provide a future signal estimate. The compressor is operated based on the future signal estimate.

In view of the above, it will be apparent to those skilled in the art from this disclosure that there exists a need for an improved apparatus and/or method. This invention addresses this need in the art as well as other needs, which will become apparent to those skilled in the art from this disclosure.

### SUMMARY OF THE INVENTION

Accordingly, it is an object of the present invention to provide a method of manufacturing an apparatus for supplying air to a fuel cell,
wherein the apparatus is capable of cooling a motor that is contained in the apparatus, and
wherein the apparatus is capable of reducing or preventing outside leakage of sound noises that are generated by a motor and/or a pump in the apparatus.

In accordance with the present invention, a method of manufacturing an air supplying apparatus is provided as set forth in claim 1. The air supplying apparatus includes a pump, a motor, a housing, and an intake unit. The motor drives the pump. The housing provides a chamber that contains the pump and the motor. The intake unit supplies an air to the chamber. The intake unit includes first and second portions. The first portion communicates with the atmosphere outside the apparatus. The second portion is coupled to the housing. The second portion communicates with the chamber. The second portion is configured to blow the air to the motor.

The intake unit communicates between the outside atmosphere and the chamber. The intake unit supplies an air to the chamber that contains the pump and the motor. The intake unit is configured to blow the air to the motor, thereby cooling the motor and preventing the motor from being overheated. The air is blown to the motor thereby cooling the motor and the housing and then suctioned into the pump. Cooling the motor prevents the motor from being overheated; thereby preventing the air supplying apparatus from failure and inoperability. The housing also contains the motor and the pump to shield sound noises that are generated by the motor and the pump. The air supply apparatus is configured to cool the motor as well as to shield and reduce the sound noises that are generated by the motor and the pump.

The housing has a dimension that is based on the wavelength of a discharge sound that is generated by the pump The dimension is such that the housing performs an expansion silencer that reduces the discharge sound with a particular frequency that is generated by the motor. Namely, the air supply apparatus is configured to further reduce the discharge sound that is generated by the pump. In view that the housing performs the expansion silencer, the housing has an overall dimension in the longitudinal direction which is equal to one quarter λ/4 of the wavelength λ of a discharge sound that is generated by the pump.

Preferably, the intake unit further includes a sound absorbing silencer which reduces the sound noises that are generated by the flow of the air through the intake unit, while the pump operates to suction the air.

In some cases, it is preferable that the intake unit may have a center axis that crosses the center axis of the motor so that the air as fed by the intake unit is blown to the motor, thereby realizing highly effective cooling of the motor and preventing the motor from overheat. The air is blown to the motor thereby cooling the motor and the housing and then suctioned into the pump. Cooling the motor prevents the motor from being overheated; thereby preventing the air supplying apparatus from failure and inoperability.

Preferably, the second portion of the intake unit may be positioned relative to the motor so as to blow the air to the motor directly, thereby realizing highly effective cooling of the motor and preventing the motor from overheat. The air is blown to the motor thereby cooling the motor and the housing and then suctioned into the pump. Cooling the motor prevents the motor from being overheated; thereby preventing the air supplying apparatus from failure and inoperability. In some cases, the intake unit may have a center axis that is aligned to the center axis of the motor.

Preferably, the second portion may have a center axis that extends toward the motor so as to blow the air to the motor directly, thereby realizing highly effective cooling of the motor and preventing the motor from overheat. The air is blown to the motor thereby cooling the motor and the housing and then suctioned into the pump. Cooling the motor prevents the motor from being overheated; thereby preventing the air supplying apparatus from failure and inoperability.

Typically, the air supplying apparatus can be applied to a fuel cell system that includes a fuel cell, a fuel supplying apparatus connected to the fuel cell to supply a fuel to the fuel cell, and the air supplying apparatus connected to the fuel cell to supply the air to the fuel cell. This application of the air supplying apparatus to the fuel cell system may be effective when the fuel cell system is used in a room that needs to reduce any sound noises.

These and other objects, features, aspects, and advantages of the present invention will become apparent to those skilled in the art from the following detailed descriptions taken in conjunction with the accompanying drawings, illustrating the embodiments of the present invention.

### BRIEF DESCRIPTION OF THE DRAWINGS

Referring now to the attached drawings which form a part of this original disclosure:
FIG 1A is a schematic cross sectional view illustrating an air supplier in accordance with a first preferred embodiment of the present invention;
FIG 1B is a schematic cross sectional view, taken alone a B-B line, of FIG 1A;
FIG 2 is a block diagram illustrating a fuel cell module that includes the air supplier of FIGS. 1A and 1B in accordance with the first preferred embodiment of the present invention;
FIG 3 is a schematic view illustrating an air supplier in comparative example 1;
FIG 4 is a schematic view illustrating an air supplier in comparative example 2;
FIG 5 is a schematic view illustrating an air supplier in comparative example 3;
FIG 6 is a diagram illustrating variations of sound pressure levels [dB] over octave band center frequency [Hz] for the air suppliers in the embodiment of the present invention and Comparative Examples 1, 2 and 3;
FIG 7 is a diagram illustrating variation in temperature of motor over operating time for the air suppliers in the embodiment of the present invention and Comparative Example 3; and
FIG 8 is a schematic cross sectional view illustrating a modified air supplier in accordance with a second preferred embodiment of the present invention.

### DETAILED DESCRIPTION OF THE INVENTION

Selected embodiments of the present invention will now be described with reference to the drawings. It will be apparent to those skilled in the art from this disclosure that the following descriptions of the embodiments of the present invention are provided for illustration only and not for the purpose of limiting the invention .

### First Embodiment:

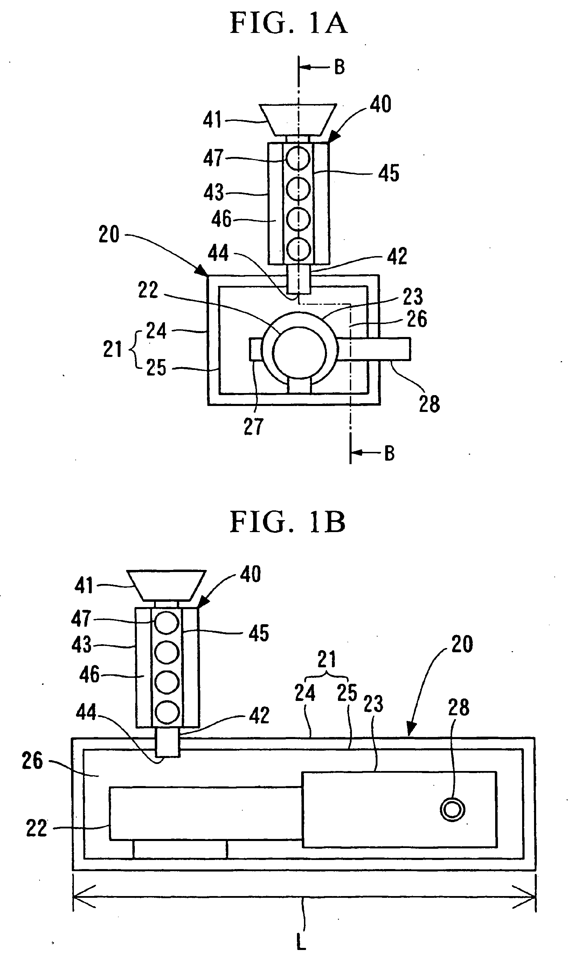

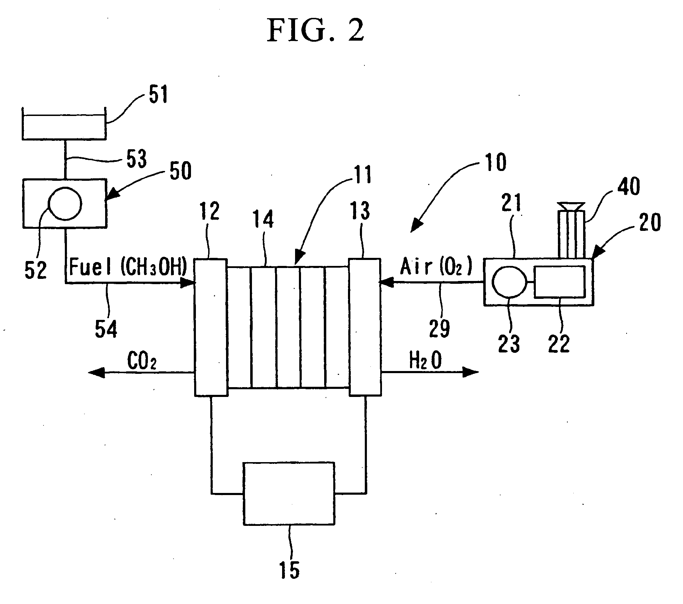

FIG 1A is a schematic cross sectional view illustrating an air supplier in accordance with a first preferred embodiment of the present invention. FIG 1B is a schematic cross sectional view, taken alone a B-B line, of FIG. 1A. FIG 2 is a block diagram illustrating a fuel cell module that includes the air supplier of FIGS. 1A and 1B in accordance with the first preferred embodiment of the present invention.

With reference to FIG 2, a fuel cell module 10 may include, but is not limited to, a fuel cell 11, an air supplier 20, and a fuel supplier 50. The air supplier 20 is configured to supply an oxygen-containing air to the fuel cell 11. The fuel supplier 50 is configured to supply a fuel to the fuel cell 11.

In some cases, the fuel cell 11 can be realized by a direct methanol fuel cell (DMFC) which is configured to cause a reaction between methanol as a fuel and oxygen in the air, thereby generating power. In other cases, the fuel cell 11 can also be realized by a stack of plural direct methanol fuel cells (DMFCs).

The fuel cell 11 may include, but is not limited to, a fuel electrode 12 as an anode, an air electrode 13 as a cathode, and an electrolyte membrane 14. The electrolyte membrane 14 is interposed between the fuel electrode 12 and the air electrode 13. The fuel supplier 50 can be configured to supply a methanol solution as a fuel to a fuel electrode side in which the fuel electrode 12 as the anode is provided. The air supplier 20 can be configured to supply an oxygen-containing air to an air electrode in which the air electrode 13 as the cathode is provided. For convenience, the fuel electrode side will hereinafter be referred to as the fuel electrode side 12, and the air electrode side will hereinafter be referred to as the air electrode side 13.

The fuel electrode side 12 generates a reaction product of carbon dioxide. The air electrode side 13 generates another reaction product of waste water. Carbon dioxide is discharged from the fuel electrode side 12. Waste water is discharged from the air electrode side 13. The fuel electrode 12 and the air electrode 13 are connected to each other through a load 15.

The direct methanol fuel cell (DMFC) 11 is designed to cause the following reactions.
Fuel Electrode: CH₃OH + H₂O → CO₂ + 6H⁺ + 6e⁻
Air Electrode: O₂ + 4H⁺ + 4e⁻ → 2H₂O
DMFC: 2CH₃OH + 3O₂ → 2CO₂ + 4H₂O

The air supplier 20 can be configured to take an oxygen containing air from the atmosphere and to supply the oxygen containing air onto the air electrode 13.

In some cases, the fuel supplier 50 may include, but is not limited to, a fuel tank 51, a fuel pump 52, and a first fuel supply path 53, and a second fuel supply path 54. The first fuel supply path 53 communicates between the fuel tank 51 and the fuel pump 52. The first fuel supply path 53 is configured to allow the fuel to be fed from the fuel tank 51 to the fuel pump 52. The second fuel supply path 54 communicates between the fuel pump 52 and the fuel electrode side 12. The second fuel supply path 54 is configured to allow the fuel to be fed from the fuel pump 52 to the fuel electrode side 12. The fuel pump 52 has an intake port which is connected through the first fuel supply path 53 to the fuel tank 51. The fuel pump 52 has a discharge port which is connected through the second fuel supply path 54 to the fuel electrode side 12. The fuel tank 51 stores the fuel such as the methanol solution. The fuel pump 52 can be driven to cause that the fuel is fed from the fuel tank 51 through the first and second fuel supply paths 53 and 54 to the fuel electrode side 12.

The air supplier 20 is connected through an air supply path 29 to the air electrode side 13. The air supply path 29 communicates between the air supplier 20 and the air electrode side 13. The air supply path 29 is configured to allow the oxygen containing air to be fed from the air supplier 20 to the air electrode side 13. As shown in FIG 2, the air supplier 20 may include, but is not limited to, a housing 21, a motor 22, a pump 23, and an intake unit 40.

The configuration of the air supplier 20 is well illustrated in FIGS. 1A and 1B. In some cases, the housing 21 can be formed by a pair of outer and inner casings 24 and 25. The outer and inner casings 24 and 25 can also be realized by a metal such as stainless. The housing 21 can preferably be configured to provide sound insulation. The outer and inner casings 24 and 25 are separated by a gap from each other. In light of sound insulation, the gap between the outer and inner casings 24 and 25 may be kept in a vacuum. In other cases, the gap between the outer and inner casings 24 and 25 can be filled with a gas such as an air or an inert gas. In still other cases, the gap can be filled with a sound absorbing material such as glass wool, an open-cell foam, or an urethane foam. The housing 21 forms a chamber 26 which contains the motor 22 and the pump 23.

The motor 22 and the pump 23 are contained in the chamber 26 of the housing 21. In some cases, the motor 22 can be realized by a DC electric motor or an AC electric motor. The pump 23 is connected to the motor 22 so that the pump 23 is driven by the motor 22. The pump 23 has an intake port 27 and a discharge port 28. The intake port 27 is open to the chamber 26, thereby allowing the pump 23 to intake the air in the chamber 26. The pump 23 pressurizes the intake air. The discharge port 28 is connected to the air supply path 29. The air supply path 29 is further connected to the air electrode side 13 of the fuel cell 11. The air supply path 29 connects the discharge port 28 and the air electrode side 13. The pressured air is discharged from the discharge port 28 and then fed through the air supply path 29 to the air electrode side 13 of the fuel cell 11.

The intake unit 40 is coupled to the housing 21. In some case, the intake unit 40 can be disposed so that the center axis of the intake unit 40 crosses the center axis of the motor 22. As illustrated in FIGS. 1A and 1B, the intake unit 40 can be disposed over the motor 22, provided that the center axis of the intake unit 40 crosses the center axis of the motor 22. It is possible as modifications that the intake unit 40 can be disposed at other position as along as the center axis of the intake unit 40 crosses the center axis of the motor 22. The intake unit 40 can be disposed at a side position, where the center axis of the intake unit 40 crosses the center axis of the motor 22. Preferably, the motor 22 is positioned so that the center axis of the motor 22 is aligned to the center axis of the intake unit 40.

The intake unit 40 has opposing first and second sides. The intake unit 40 may further include, but is not limited to, an intake port 41, a connector 42, and a silencer 43. The intake port 41 is positioned in the first sides. The connector 42 is positioned in the second side. The silencer 43 is interposed between the intake port 41 and the connector 42. The intake port 41 has an air filter that removes foreign matter from the intake air. The intake port 41 has opposing first and second sides. The first side is open to the outside atmosphere. The second side is connected to the silencer 43.

The connector 42 connects the silencer 43 and the chamber 26. The connector 42 has an air passage 44 which is open to the inside atmosphere in the chamber 26. The intake unit 40 has the intake port 41 in the first side and the connector 42 in the second side. The intake port 41 is open to the outside atmosphere. The connector 42 has the air passage 44 which is open to the inside atmosphere in the chamber 26. The oxygen containing air is taken from the outside atmosphere and fed through the silencer 43 and the air passage 44 to the inside atmosphere in the chamber 26.

The connector 42 is aligned to the center axis of the intake unit 40. As described above, the intake unit 40 may preferably be disposed so that the motor 22 is positioned on the extended line that is aligned to the center axis of the intake unit 40. In this case, the motor 22 is positioned on the extended line of the connector 42. The oxygen containing air that is fed by the intake unit 40 is supplied to the chamber 26 while the oxygen containing air is also blown to the motor 22. The oxygen containing air is further flown through the chamber 26 toward the intake port 27 of the pump 23. The oxygen containing air is then suctioned by the pump 23 and fed through the air supply path 29 to the air electrode side 13 of the fuel cell 11.

The oxygen containing air is supplied by the intake unit 40 to the chamber 26, while the oxygen containing air is blown to the motor 22. The side wall of the motor 22 is likely to be heated. Blowing the oxygen containing air to the side wall of the motor 22 may effectively cool the pump 23.

It is possible as a modification that the center axis of the intake unit 40 is aligned to the center axis of the motor 22 so that the intake unit 40 supplies the oxygen containing air to the chamber 26, while the oxygen containing air is blown to the motor 22, thereby cooling the motor 22.

In some cases, the silencer 43 may be realized by a sound silencer or a sound absorbing silencer. The silencer 43 may have a tube member 45 and a sound absorbing material 46. The tube member 45 can be realized by a cylindrically shaped member that is made of a metal or a resin. The tube member 45 provides a sound absorbing air passage that allows the oxygen containing air to flow from the intake port 41 to the air passage 44. The sound absorbing air passage communicates with the air passage 44 of the connector 42. In some cases, the tube member 45 may have a cylindrically shaped side wall which has openings 47. The shape of the openings 47 may be, but is not limited to, a circle. The sound absorbing material 46 can be provided around the cylindrically shaped side wall of the tube member 45. The sound absorbing material 46 can plug or seal the openings 47. The sound absorbing material 46 can be realized by glass wool, or a porous member. In some cases, the porous material may be a fiber porous material such as a dust-proof bonded fabric. In other cases, the porous material may be a resin foam material. The sound absorbing material 46, which is disposed around the cylindrically shaped side wall with the openings 47 of the tube member 45, can absorb suction noise that is generated by the flow of the oxygen containing air in the sound absorbing air passage of the tube member 45.

The housing 21 is configured to perform an expansion silencer. The expansion silencer is a silencer that reduces the sound volume by a combination of an expanded passage with a narrow passage through which a sound wave propagates. The amount of sound volume reduction depends on a ratio in sectional area of the expanded passage to the narrow passage. The frequency of a sound that is to be reduced by the expansion silencer depends on the length of the expanded passage. The length of the expanded passage can be equal to the real number times of the specific frequency of a sound that is to be reduced. For example, the pump 23 may be designed to render the discharge port 28 discharge the air about 400 times per second. The pump 23 may generates a discharge sound of a frequency of 400 Hz. Assuming that the sound velocity is about 340 m/sec. at room temperature, the discharge sound generated from the pump 23 has a wavelength λ which is given by 340/400≒ 0.85m. The total length L of the housing 21 can be set one quarter (1/4) of the wavelength λ of the discharge sound that is generated by the pump 23. In this case, the housing 21 performs as an expansion silencer that reduces the discharge sound generated by the pump 23. For example, the total length L of the housing 21 can preferably be set 0.85/4≒0.21m.

Performances of the air supplier 20 of this embodiment will be evaluated. For evaluation on the performances of the air supplier 20, the following three air suppliers were prepared.

### Comparative Example 1:

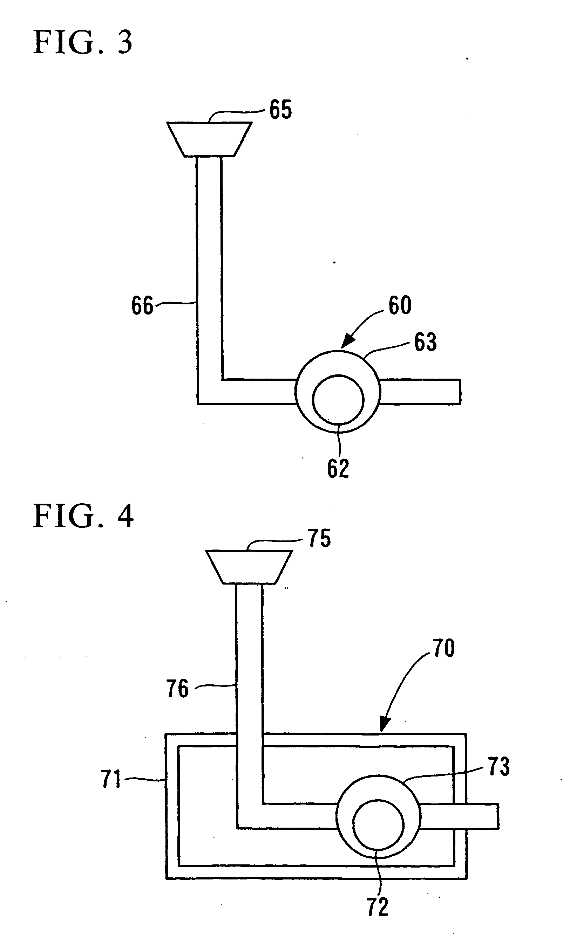

FIG 3 is a schematic view illustrating an air supplier in comparative example 1. An air supplier 60 includes a motor 62 and a pump 63, both of which are the same as the above-described motor 22 and pump 23 of the air supplier 20. The air supplier 60 also includes an intake unit that further includes an intake port 65 with an air filter, and a connector 66 that communicates the intake port 65 to the pump 63. The intake unit does not include any silencer such as the above-described silencer 43 of the intake unit 40. The air supplier 60 has no housing, so that the motor 62 and the pump 63 are exposed to the outside atmosphere. The motor 62 is connected to the pump 63 to drive the pump 63. The pump 63 is configured to feed an oxygen containing air from the outside atmosphere through the connector 66 to the air electrode side 13 of the fuel cell 11.

### Comparative Example 2:

FIG 4 is a schematic view illustrating an air supplier in comparative example 2. An air supplier 70 includes a housing 71, a motor 72, and a pump 73. The motor 72 and the pump 73 are the same as the above-described motor 22 and pump 23 of the air supplier 20. The air supplier 70 also includes an intake unit that further includes an intake port 75 with an air filter, and a connector 76 that communicates the intake port 75 to the pump 73. The intake unit does not include any silencer such as the above-described silencer 43 of the intake unit 40. The motor 72 is connected to the pump 73 to drive the pump 73. The pump 73 is configured to feed an oxygen containing air from the outside atmosphere through the connector 76 to the air electrode side 13 of the fuel cell 11. The motor 72 and the pump 73 are contained in the housing 71. The housing 71 is structurally the same as the above-describe housing 21 of the air supplier 20. Namely, the housing 71 can be formed by a pair of outer and inner casings. However, the housing 71 has the total length in the longitudinal direction that is not regulated in light of the wavelength of a sound noise that is to be reduced. In contrast, the above-described housing 21 is designed to have the total length in the longitudinal direction which corresponds to one quarter of the wavelength of a sound noise that is to be reduced.

### Comparative Example 3:

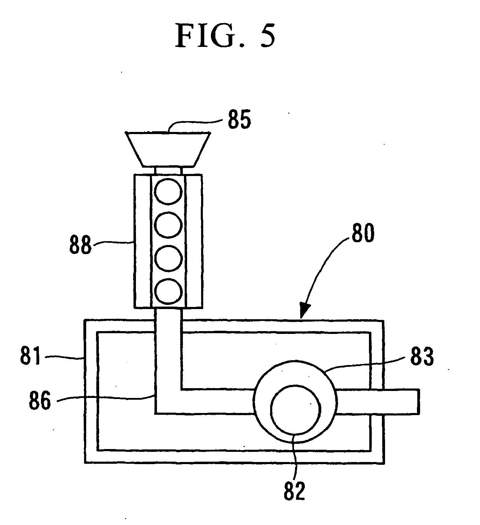

FIG 5 is a schematic view illustrating an air supplier in comparative example 3. An air supplier 80 includes a housing 81, a motor 82, and a pump 83. The motor 82 and the pump 83 are the same as the above-described motor 22 and pump 23 of the air supplier 20. The air supplier 80 also includes an intake unit that further includes an intake port 85 with an air filter, a silencer 88, and a connector 86 that communicates the intake port 85 to the pump 83. The silencer 88 is interposed between the intake port 85 and the connector 86. The silencer 88 of the intake unit is the same as the above-described silencer 43 of the intake unit 40. The motor 82 is connected to the pump 83 to drive the pump 83. The pump 83 is configured to feed an oxygen containing air from the outside atmosphere through the connector 86 to the air electrode side 13 of the fuel cell 11. The motor 82 and the pump 83 are contained in the housing 81. The housing 81 is structurally the same as the above-describe housing 21 of the air supplier 20. Namely, the housing 81 can be formed by a pair of outer and inner casings. However, the housing 81 has the total length in the longitudinal direction that is not regulated in light of the wavelength of a sound noise that is to be reduced. In contrast, the above-described housing 21 is designed to have the total length in the longitudinal direction which corresponds to one quarter of the wavelength of a sound noise that is to be reduced.

### Evaluations on Sound insulation and Cooling:

### (Sound Insulation Performance)

The air supplier 20 of the embodiment of the present invention is compared to each of the air suppliers 60, 70 and 80 in Comparative Examples 1, 2 and 3, in light of the sound insulation performance and the cooling performance.

Evaluation on the sound insulation performance was made as follow. An audio meter was used to compare in the sound insulation performance between the air supplier 20 and each of the air suppliers 60, 70 and 80. The audiometer was positioned to be distanced by 1 meter from each of the pumps 23, 63, 73, and 83 of the air suppliers 20, 60, 70 and 80. The audiometer was operated to measure the sound level. The measured sound level was then corrected by A-characteristics (see JIS: C-1505, C1502), thereby obtaining the corrected sound level. The correction with A-characteristics is such that the sound pressure level for each octave band is corrected with the A-characteristics over the entirety of an audible band. The corrected sound level of the air supplier 20 was 39dB(A). The corrected sound level of the air supplier 60 was 70dB(A). The corrected sound level of the air supplier 70 was 50dB(A). The corrected sound level of the air supplier 80 was 45dB(A). The air supplier 20 is most superior as compared to the other air suppliers 60, 70 and 80 in light of the sound insulation performance.

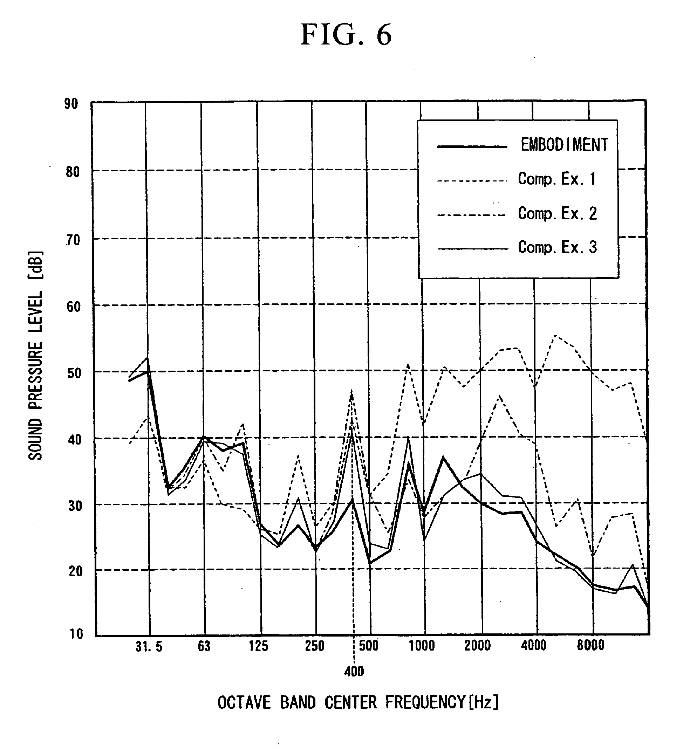

FIG 6 is a diagram illustrating variations of sound pressure levels [dB] over octave band center frequency [Hz] for the air suppliers 20, 60, 70 and 80 in the embodiment of the present invention and Comparative Examples 1, 2, and 3. The sound insulation performance of the air supplier 20 in accordance with the embodiment of the present invention will be evaluated in detail with comparing the other air suppliers 60, 70 and 80 in Comparative Examples 1, 2, and 3. FIG 6 demonstrates that the air supplier 20 of the embodiment of the present invention realizes remarkable reduction of the sound pressure level at 400 [Hz] as compared to the other air suppliers 60, 70 and 80 in Comparative Examples 1, 2, and 3. This demonstrates that the housing 21 performs the expansion silencer that effectively reduces the discharge sound noise that is generated by the pump 23.

The air supplier 20 of the embodiment of the present invention is also superior in the sound insulation performance in another frequency band higher than 1000 [Hz] as compared to the air suppliers 60 and 70 in Comparative Examples 1 and 2. The sound noise that is generated by the pump 23 has the frequency in the frequency band higher than 1000 [Hz]. The silencers 43 and 88 are effective to reduce the sound pressure level in the frequency band higher than 1000 [Hz]. Namely, the silencers 43 and 88 are effective to reduce the sound noises that are generated by the pumps 23 and 83. The air supplier 20 of the embodiment of the present invention is configured to effectively reduce the sound noise that is generated by the pump 23.

In addition, the air supplier 20 of the embodiment of the present invention is also superior in the sound insulation performance at 400 [Hz] as compared to the air suppliers 60, 70 and 80 in Comparative Examples 1, 2 and 3. Further, the air supplier 20 of the embodiment of the present invention is superior in the sound insulation performance in a frequency band higher than 400 [Hz] as compared to the air supplier 60 in Comparative Example 1.

### (Cooling Performance)

Evaluation on the cooling performance was made as follow. The air supplier 20 in accordance with the embodiment of the present invention was evaluated on the cooling performance as compared to the air supplier 80 of Comparative Example 3. The air supplier 60 in Comparative Example 1 has no housing or silencer so that the motor 62 and the pump 63 are exposed to the outside atmosphere. The air supplier 60 free of any housing and any silencer in Comparative Example 1 is superior in the cooling performance, but is poor in the sound insulation performance. The air supplier 70 in Comparative Example 2 has the housing 71 and no silencer so that the motor 72 and the pump 73 are contained in the housing 71. However, the housing 71 is not designed to perform as the expansion silencer. The air supplier 70 free of any silencer in Comparative Example 2 is poor in the cooling performance and the sound insulation performance. The air supplier 80 in Comparative Example 3 has the housing 81 or the silencer 88 so that the motor 82 and the pump 83 are contained in the housing 81. However, the housing 81 is not designed to perform as the expansion silencer. The air supplier 80 with the housing 81 and the silencer 88 in Comparative Example 3 is poor in the cooling performance, but is not superior in the sound insulation performance.
Thus, the air supplier 20 in accordance with the embodiment of the present invention was evaluated on the cooling performance as compared to the air supplier 80 of Comparative Example 3.

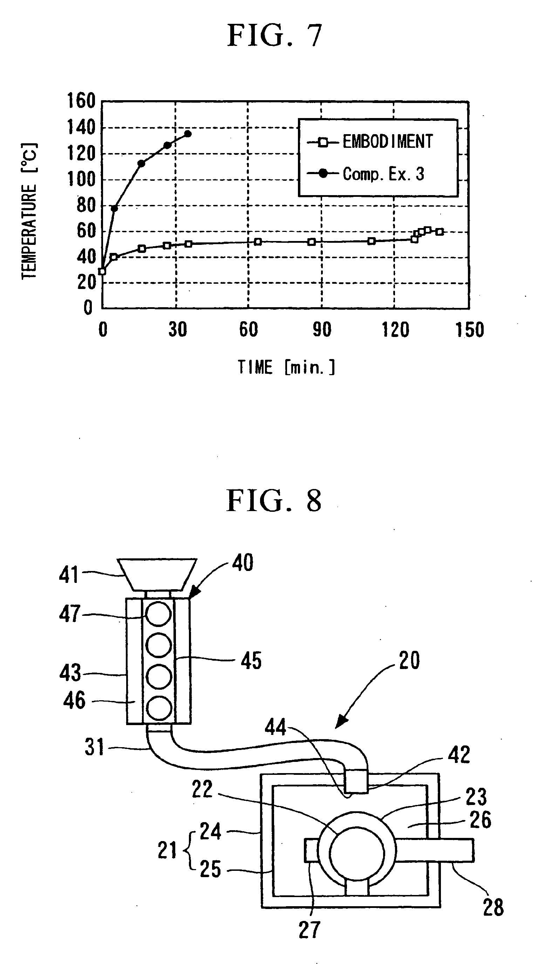

FIG 7 is a diagram illustrating variation in temperature of motor over operating time for the air suppliers 20 and 80 in the embodiment of the present invention and Comparative Example 3. A temperature sensor was used to measure the temperature of the motor 22 or 82 of the air supplier 20 or 80. The temperature sensor was positioned under the motor 22 or 82. The oxygen containing air is supplied into the housing 21 or 81 from the air passage 44 or the connector 86. The temperature sensor does not receive the blow of the oxygen containing air from the air passage 44 or the connector 86. The temperature sensor is not illustrated in FIGS. 1A, 1B and 5.

As shown in FIG 7, the pump 83 of the air supplier 80 of Comparative Example 3 started it operation and stopped after about 30 minutes by the stop of the motor 82 due to the overheat of the motor 82. As described above, the motor 82 is disposed in the housing 81. The cooling of the motor 82 is insufficient, thereby allowing the motor 82 to be overheated to stop its driving operation, resulting in the stop of the pumping operation of the pump 83.

As described above, the air supplier 20 of the embodiment of the present invention is configured such that the oxygen containing air is fed through the intake unit 40 and is blown directly to the motor 22 that drives the pump 23, thereby supplying the oxygen containing air to the chamber 26 of the housing 21, while blowing the oxygen containing air directly to the motor 22 to cool the motor 22. The motor 22 is cooled by the direct blow of the oxygen containing air from the intake unit 40 during the driving operation of the motor 22. Cooling the motor 22 keeps the temperature of the motor 22 at about 50°C, without overheating the motor 22, even the motor 22 is continued to drive the pump 23. As shown in FIG 7, the pump 23 started its operation and forcibly stopped its operation after 130 minutes, so that the oxygen containing air is not blown to the motor 22 and the motor 22 is not cooled. As a result, the temperature of the motor 22 is slightly increased even after the motor 22 has been stopped. This means that blowing the oxygen containing air directly to the motor 22 cools the motor 22.

The air supplier 20 of the embodiment of the present application is configured such that the motor 22 is cooled by the direct blow of the oxygen containing air, while the oxygen containing air is supplied to the chamber 26 of the housing 21. The motor 22 and the pump 23 are disposed in the housing 21 in order to shield the sound noises that are generated by the motor 22 and the pump 23. The air supplier 20 of the embodiment of the present application is configured to cool the motor 22 and to shield the sound noises that have been generated by the motor 22 and the pump 23. Namely, the air supplier 20 is configured to prevent overheat of the motor 22 and also prevent the leakage of the sound noises that have been generated by the motor 22 and the pump 23.

The overall dimension L of the housing 21 in its longitudinal direction is decided based on the frequency of the sound noise such as discharge sound that is generated by the pump 23, so that the housing 21 performs as the expansion silencer. The housing 21 can reduce the sound of a specific frequency that is generated by the pump 23. Further, the silencer 43 is disposed on the intake unit 40 that introduces the air into the chamber 26 of the housing 21. The silencer 43 efficiently reduces the suction sound. Namely, the discharge sound noise of a particular frequency that is generated by the pump is reduced by the housing 21 that performs as the expansion silencer, while the suction sound noise as generated at the intake unit 40 is reduced by the silencer 43, thereby reducing the sound noises of the air supplier 20.

### Modification:

In accordance with the above-described embodiment, the air supplier 20 is configured to cause that the air that is fed by the intake unit 40 is blown to the motor 22. For example, the intake unit 40 is disposed so that the center axis of the intake unit 40 crosses the center axis of the motor 22. It is, however, possible to modify the positional relation between the motor 22 and the intake unit 40 as long as the air that is fed by the intake unit 40 is blown to the motor 22. FIG 8 is a schematic cross sectional view illustrating a modified air supplier in accordance with a second preferred embodiment of the present invention. The modified air supplier 20 of FIG 8 is different from the air supplier 20 of FIGS. 1A and 1B as follows. The intake unit 40 has a pipe 31 which connects between the connector 42 and the silencer 43. The pipe 31 provides an air passage and communicates between the sound absorbing air passage of the tube member 45 and the air passage 44 of the connector 42 which is open to the inside atmosphere in the chamber 26. The pipe 31 allows that the air that is fed by the intake unit 40 is blown to the motor 22, even the center axis of the tube member 45 is displaced from the motor 22, and the center axis of the connector 42 extends toward the motor 22. In other words, the pipe 31 increases the flexibility in positioning the intake unit 40 relative to the housing 21, while the air that is fed by the intake unit 40 is blown to the motor 22. In some cases, the pipe 31 may be flexible. The motor 22 can be modified to have a heat radiator. A typical example of the heat radiator can include, but is not limited to, one or more radiator fins.

As used herein, the following directional terms "forward, rearward, above, downward, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The terms of degree such as "substantially," "about," and "approximately" as used herein mean a reasonable amount of deviation of the modified term such that the end result is not significantly changed. For example, these terms can be construed as including a deviation of at least ± 5 percents of the modified term if this deviation would not negate the meaning of the word it modifies.

While preferred embodiments of the invention have been described and illustrated above, it should be understood that these are exemplary of the invention and are not to be considered as limiting. Additions, omissions, substitutions, and other modifications can be made without departing from the scope of the present invention as defined by as defined by the appended claims.

## Claims

1. A method of manufacturing an air supplying apparatus (20), said air supplying apparatus (20) comprising:
a pump (23);
a motor (22) that drives the pump (23);
a housing (21) providing a chamber (26) that contains the pump (23) and the motor (22); and
an intake unit (40) that supplies air to the chamber (26),
the intake unit including first and second portions, the first portion communicating with the atmosphere outside the apparatus (20), the second portion being coupled to the housing (21), the second portion communicating with the chamber (26), the second portion being configured to blow the air to the motor (22);
**characterized in that**
the method comprises the steps of:
determining a specific frequency of a sound that is to be reduced, wherein the sound to be reduced is a discharge sound generated by the pump (23);
deciding an overall dimension of the housing (21) in the longitudinal direction based on the specific frequency; and
setting the overall dimension of the housing (21) in the longitudinal direction to be equal to one quarter λ/4 of the wavelength λ, of said discharge sound, where the wavelength λ is given by dividing the velocity of sound by the specific frequency, so that the housing (21) is adapted to act as an expansion silencer that reduces the discharge sound.

2. The method according to claim 1, wherein the intake unit (40) further includes a sound absorbing silencer (43).

3. The method according to claim 1, wherein the intake unit (40) has a center axis that crosses the center axis of the motor (22).

4. The method according to claim 1, wherein the second portion of the intake unit (40) is positioned relative to the motor (22) so as to blow the air to the motor (22).

5. The method according to claim 1, wherein the second portion has a center axis that extends toward the motor (22).

6. The method according to claim 1, wherein the pump (23) is configured to be connectable to a fuel cell (11) and to supply the air to the fuel cell (11).

7. The method according to claim 1, wherein the intake unit (40) has a center axis that is aligned to the center axis of the motor (22).

## Patentansprüche

1. Verfahren zur Herstellung einer Luftliefervorrichtung (20), wobei die Luftliefervorrichtung (20) Folgendes aufweist:
eine Pumpe (23);
einen Motor (22), der die Pumpe (23) antreibt;
ein Gehäuse (21), welches eine Kammer (26) vorsieht, die die Pumpe (23) und den Motor (22) enthält; und
eine Einlasseinheit (40), die Luft in die Kammer (26) liefert,
wobei die Einlasseinheit erste und zweite Teile aufweist, wobei der erste Teil mit der Atmosphäre außerhalb der Vorrichtung (20) in Verbindung steht, wobei der zweite Teil mit dem Gehäuse (21) gekoppelt ist, wobei der zweite Teil mit der Kammer (26) in Verbindung steht, wobei der zweite Teil konfiguriert ist, um die Luft zum Motor (22) zu blasen;
**dadurch gekennzeichnet, dass** das Verfahren Folgende Schritte aufweist:
Bestimmen einer spezifischen Frequenz eines zu reduzierenden Geräusches, wobei das zu reduzierende Geräusch ein Auslassgeräusch ist, welches von der Pumpe (23) erzeugt wird;
Festlegen einer Gesamtabmessung des Gehäuses (21) in Längsrichtung basierend auf der spezifischen Frequenz; und
Einstellen der Gesamtabmessung des Gehäuses (21) in Längsrichtung so, dass diese gleich einem Viertel λ/4 der Wellenlänger λ des Auslassgeräusches ist, wobei die Wellenlänge λ gegeben ist durch Teilen der Schallgeschwindigkeit durch die spezifische Frequenz, so dass das Gehäuse (21) geeignet ist, um als Expansionsschalldämpfer zu wirken, der das Auslassgeräusch reduziert.

2. Verfahren nach Anspruch 1, wobei die Einlasseinheit (40) weiter einen schallabsorbierenden Schalldämpfer (43) aufweist.

3. Verfahren nach Anspruch 1, wobei die Einlasseinheit (40) eine Mittelachse hat, die die Mittelachse des Motors (22) kreuzt.

4. Verfahren nach Anspruch 1, wobei der zweite Teil der Einlasseinheit (40) relativ zum Motor (22) so positioniert ist, dass er Luft zum Motor (22) bläst.

5. Verfahren nach Anspruch 1, wobei der zweite Teil eine Mittelachse hat, die sich zum Motor (22) erstreckt.

6. Verfahren nach Anspruch 1, wobei die Pumpe (23) so konfiguriert ist, dass sie mit einer Brennstoffzelle (11) verbindbar ist, und Luft zur Brennstoffzelle (11) liefert.

7. Verfahren nach Anspruch 1, wobei die Einlasseinheit (40) eine Mittelachse hat, die zur Mittenachse des Motors (22) ausgerichtet ist.

## Revendications

1. Procédé pour fabriquer un appareil de fourniture d'air (20), l'appareil de fourniture d'air (20) comprenant :
une pompe (23) ;
un moteur (22) qui entraîne la pompe (23) ;
un boîtier (21) fournissant une chambre (26) qui contient la pompe (23) et le moteur (22) ; et
une unité d'admission (40) qui fournit de l'air à la chambre (26),
l'unité d'admission comprenant des première et deuxième portions, la première portion communiquant avec l'atmosphère extérieure à l'appareil (20), la deuxième portion étant couplée au boîtier (21), la deuxième portion communiquant avec la chambre (26), la deuxième portion étant agencée pour souffler de l'air vers le moteur (22) ;
**caractérisé en ce que**
le procédé comprend les étapes suivantes :
déterminer une fréquence spécifique d'un son qui doit être réduit, le son devant être réduit étant un son de refoulement généré par la pompe (23) ;
décider d'une dimension totale du boîtier (21) dans la direction longitudinale sur la base de la fréquence spécifique ; et
régler la dimension totale du boîtier (21) dans la direction longitudinale pour être égale à un quart λ/4 de la longueur d'onde λ du son de refoulement, la longueur d'onde λ étant obtenue en divisant la vitesse du son par la fréquence spécifique, de sorte que le boîtier (21) est adapté à se comporter comme un silencieux d'expansion qui réduit le son de refoulement.

2. Procédé selon la revendication 1, dans lequel l'unité d'admission (40) comprend en outre un silencieux d'absorption de son (43).

3. Procédé selon la revendication 1, dans lequel l'unité d'admission (40) a un axe central qui coupe l'axe central du moteur (22).

4. Procédé selon la revendication 1, dans lequel la deuxième portion de l'unité d'admission (40) est positionnée par rapport au moteur (22) de façon à souffler de l'air vers le moteur (22).

5. Procédé selon la revendication 1, dans lequel la deuxième portion a un axe central qui s'étend vers le moteur (22).

6. Procédé selon la revendication 1, dans lequel la pompe (23) est agencée pour pouvoir être connectée à une pile à combustible (11) et pour fournir l'air à la pile à combustible (11).

7. Procédé selon la revendication 1, dans lequel l'unité d'admission (40) a un axe central qui est aligné sur l'axe central du moteur (22).
